# EUROPEAN PATENT APPLICATION

(11) **EP 2 958 079 A1**
(43) Date of publication of application: **23.12.2015**
(21) Application number: 13874977.5
(22) Date of filing: 14.02.2013
(51) Int. Cl.: G06T 19/00, H04W 4/02

(54) **METHOD FOR THE REPRESENTATION OF GEOGRAPHICALLY LOCATED VIRTUAL ENVIRONMENTS AND MOBILE DEVICE**

(71) Applicant: Manin Company Construcciones en Acero Inoxidable S.L.U., 46290 Alcácer (ES)
(72) Inventor: CÉSPEDES NARBONA, Mariano Alfonso, E-46008 Valencia (ES); GONZALEZ GRAU, Sergio, E-46008 Valencia (ES)
(74) Representative: Polo Montañes, Carlos
(86) International application number: PCT/ES2013/070090
(87) International publication number: WO 2014/125134

(57) **Abstract**

The invention relates to the representation of a high-quality vectorial and textured graphical environment, including, as the basis of this representation, the capturing of video and the sequencing of images and graphics in a vectorial format, provided by the image-capturing means of the mobile device that implements the method. Furthermore, this is carried out by placing said vectorial graphical environments in a pre-determined geographic location and subordinating the representation thereof to the real geographic location of a mobile device (100).

## Description

### TECHNICAL FIELD

The object of the present invention is the representation of a high-quality vectorial and textured graphical environment, including, as the basis of this representation, the capturing of video and the sequencing of images and graphics in a vectorial format, provided by the image-capturing means of the mobile device that implements the method. Furthermore, this is carried out by placing said vectorial graphical environments in a pre-determined geographic location and subordinating the representation thereof to the real geographic location of the mobile device.

Therefore, the present invention combines the technical fields relating to virtual reality (VR), augmented reality (AR) and geographic location through devices with GPS technology, AGPS technology, WIFI technology, ISSP technology, gyroscopes, accelerometers or any other equivalent means.

### PRIOR ART

It must be understood that virtual reality and augmented reality practically go hand in hand since they emerged. In 1950, Morton Heilig wrote about an "Experience Theater", which could accompany all the senses in an effective manner, integrating the viewer with the activity on the screen. He built a prototype called Sensorama in 1962, together with five short films that allowed augmenting viewer experience through their senses (sight, smell, touch, and hearing).

In 1968, Ivan Sutherland, with the help of Bob Sproull, built what would widely be considered the first Head Mounted Display (HMD) for virtual reality and augmented reality. It was very primitive in terms of user interface and realism, and the HMD used by the user was so large and heavy that it had to be hung from the ceiling, and the graphics that they made of the virtual environment were simple "wire models". At the end of the 1980s the term virtual reality was made famous by Jaron Lanier, whose company created the first virtual reality gloves and glasses.

The term augmented reality was introduced by the researcher named Tom Caudell in Boeing, in 1992. Caudell was hired to find an alternative to cabling boards used by workers. He came up with the idea of special glasses and virtual boards on generic real boards. This is how it occurred to him that he was "augmenting" the reality of the user.

Augmented reality is in its initial stages of development and is being successfully implemented in some areas, but it is expected that there will soon be products on the mass market on a large scale. The basic idea of augmented reality is to overlay graphics, audio and others on a real environment in real time. Although television stations have been doing same for decades, they do so with a still image that does not adjust to the motion of the cameras.

Augmented reality is far superior to what has been used on television, although initial versions of augmented reality are currently shown at televised sporting events to show important information on the screen, such as the names of the race car drivers, repetitions of controversial plays or, primarily, to display advertisements. These systems display graphics from only one viewpoint.

The main point in the development of AR is a motion tracking system. From the start and up until now, AR is supported on markers or a marker vector within the field of vision of the cameras so that the computer has a reference point on which to overlay the images. These markers are predefined by the user and can be exclusive pictograms for each image to be overlain, simple shapes, such as picture frames, or simply textures within the field of vision.

Computing systems are much smarter now than in relation to the foregoing, and are capable of recognizing simple shapes, such as the floor, chairs, tables, simple geometric shapes, such as, for example, a cell phone on a table, or even the human body, the tracking system being able to capture, for example, a closed fist and add a virtual flower or laser saber to it.

Mobile technology has substantially revolutionized the use and needs required by AR. The capability of last-generation mobile devices far exceeds what has been explained previously and offers the possibility to geographically locate the markers, thereby allowing a new interpretation of AR and VR.

The use of augmented reality has changed greatly since the advent of smart mobile devices and access to said devices by most of the population around the world due to the reduction of their manufacturing costs and the support of telephony operating companies.

The potential of augmented reality in these devices has not yet been fully exploited today because augmented reality is limited to a few games developed for it, the overlay of simple geolocated information (small icons or tags) and last-generation GPS navigators (such as Pioneer Cyber Navi ®).

These ready-to-use augmented reality providers, such as, for example, Vuforia® (of Qualcomm®) or DART® in the GNU/GPL field, and ANDAR® or ARmedia® as payment providers, all, without exception, use public libraries for augmented reality such as OpenCv, ARToolKit or Atomic.

Almost all navigators based on GPS location data, which furthermore represent virtual elements in a real geolocated environment, use spherical mercator formulas to establish fixed-sized grids and to position the located point on these grids (represented in an image or vectorial format). These systems involve the real time downloading of data from the geographic grid provider and the use of its positioning algorithms, the downloading and representation of these elements considerably reduce performance since they use many memory and process resources in real time.

There are recent applications using the technologies described above for the representation of virtual elements in a real environment, such as:
- Layar*®* (http://www.layar.com): focused on the representation of icons and small vectorial objects indicating the location of profiles within social networks or pre-determined locations such as shops, museums, etc. Layar uses the Google Maps® geolocating system and the augmented reality technology , provided by Vuforia®.
- ARmedia® (http://www.armedia.it): this augmented reality provider represents complex vectorial objects such as buildings or old constructions in pre-determined locations, but its representation quality is very poor compared with that provided in the present invention; it also uses Google Maps® technology for the geolocation of its elements.

Hardware resource consumption of the mobile device is very high in all the described technologies and applications; if use of the image-capturing device is combined with activation of the GPS device included in the mobile device and the representation of virtual scenes having intermediate complexity, performance drops exponentially.

One of the practical purposes of this invention is to obtain a technical environment adaptable to the characteristics and features of any mobile device included in the reference framework for displaying geographically located and high-resolution AR/VR, without experiencing any reduction of performance of the mobile device.

Patent document US2012293546 describes a geographic location system based on multiple external signals and a system for representation of augmented reality based on physical markers integrating radio and/or acoustic signals. The differences with the system of the present invention are clear and defining in and of themselves both in the type of location calculation and in the type of markers used for the representation of augmented reality. The system of the present invention does not use spherical mercator-type grid-based location calculations, nor does it use physical markers for the representation of augmented reality.

Patent document US2012268493 relates to the presentation of augmented reality with vectorial graphics from one or several physical markers and proposes solutions for saving hardware resources of the device. The differences with the system of the present invention are clear and defining in and of themselves. The system of the present invention does not use physical markers for the representation of augmented reality, and the proposed performance improvement of the present invention is dedicated to all devices within the defined framework, not a single device.

PCT patent application WO03/102893 describes that the geographic location of mobile devices can be established by methods based on alternative communication networks. The difference with the system of the present invention is clear, the type of location calculation proposed in this patent is based on grid-based location calculations. The system of the present invention does not use spherical mercator-type grid-based location calculations.

Patent document WO 2008/085443 uses methods of geographic location through radio frequency emitters and receivers in the search for improving geolocation precision. The difference with the system of the present invention is clear, the type of location calculation proposed in this patent is based on grid-based location calculations. The system of the present invention does not use spherical mercator-type grid-based location calculations.

Finally, patent document US2012/0296564 establishes an advertising content guiding and location system based on augmented reality and the representation thereof through physical markers such as radio frequency or optical sensors. The differences with the system of the present invention are clear and defining in and of themselves both in the type of location calculation and in the type of markers used for the representation of augmented reality. The system of the present invention does not use spherical mercator-type grid-based location calculations, nor does it use physical markers for the representation of augmented reality.

Obtaining a technical environment adaptable to the characteristics and features of any mobile telephone for displaying geographically located and high-resolution AR/VR without losing performance of the mobile device is therefore a technical problem to be solved by the present invention.

### DISCLOSURE OF THE INVENTION

The objective of the invention is based on the representation of the vectorial graphical environment and includes, as the basis of this representation, the capturing of video, the sequencing of images or graphics in a vectorial format provided by the capturing device of the mobile device, and subordinating the representation thereof to the real geographic location of the mobile device. Achieving this objective is paired with achieving these two other objectives:
i) The geographic location of the mobile device without using the resources provided by others, such as:
   a. GPS navigation providers;
   b. Geographic map and GPS marking providers.
   c. GPS navigation grid providers.
      All this without connection to Internet-type data networks for downloading or directly using the mentioned resources. This system enables direct interaction with the represented vectorial graphics through the touch screen or communication interface with the hardware (HW) provided by the mobile device. These interactions allow both virtual navigation of the vectorial graphical environment and direct action on the elements forming it.
ii) The representation of textured vectorial graphics in real run time with the best quality that can be provided by the mobile device.

Through the set of processes described below, the system allows managing the quality of the represented vectorial graphics, always subordinating this quality to the capabilities and characteristics provided by the mobile device, thus obtaining the best possible quality without affecting fluidity of the graphical representation or of the process of the system.

This set of processes in turn includes steps intended for solving basic display problems in virtual environments and the synchronization thereof with a real environment such as:
a) Scaling of the represented vectorial graphics taking into account the real environment in which representation is intended.
b) The reduction of unnatural motion of the represented vectorial graphics in relation to the real synchronization distance with the geographic location thereof in the real environment.

As indicated in the state of the art, almost all navigators based on GPS location use spherical mercator formulas to establish fixed-sized grids and to position the located point on these grids, represented in an image or vectorial format. These systems involve the real time downloading of data from the geographic grid provider and the use of their positioning algorithms. This downloading and representation of these elements reduce the performance of the mobile device.

Each of the previously described technologies and processes, such as the AR technologies provided by Vuforia® or ARmedia®, the geographic location technologies of Google Maps® or OSM (Open Street Map), work in all mobile devices within the reference framework, but in a separate manner. Precisely the combination of two or more systems is the biggest problem for the capability of a mobile device, for correct data processing.

Downloading data over the Internet for representation, as well as the actual representation of the data provided, involves a necessary wait conditioned by the quality of reception and representation in the mobile device itself.

Upon adding the background process of the GPS element, the wait to perform more processes on the screen is longer until the data provided by same is available. With the three background processes, basic processes which include steps in a function tree such as the two-dimensional representation of grids provided by the map provider, downloading same from the Internet and waiting for GPS data, make the necessary two following processes, i.e., the capturing of images in real time and the representation of vectorial graphics, an authentic challenge for any mobile device.

The technologies described sacrifice quality of the representation of vectorial graphics. Nevertheless, greater importance has been given to this step in the present invention, such that greater accuracy of the geographic positioning data provided by the geographic location elements can be obtained.

In the present invention, GPS location technology has been dissociated through the following method, comprising a first process in which the position vectors in the local environment of the mobile device are found, both of the device and of the group of polygons that it must represent, and it then generates a difference between both.

This difference establishes three composite variables and two simple variables from the composite reference constant, such as length, altitude and height, assigned to the group of polygons.

The variables of local position, distance from the target group, the reverse calculation of GPS global positioning, the environment parameters and the layer numbering are assigned once the mobile device enters the approach area, which is predefined around the representation group.

By using raw data provided by the geographic locating device without converting to grid systems, greater positioning accuracy is obtained. The use of this data allows geographically locating an object or a group of virtual objects at an exact point with reference to the current position.

Once in the established action area, the system uses data of the geographic locating device, such as a compass, gyroscope, ISSP or any other.

In a second process, the image-capturing device of the mobile device is activated and gives layer-based representation orders, linking the layers to this order. The representation order is provided by the difference established in the first process and determines the quality of the represented element, its memory buffer assignment, its representation rate in Hz and its vertical and horizontal synchronization, always giving priority to the layer closest to the device and nil priority to the image sequences captured by the camera of the device.

Finally, and once the Boolean representation variable is established as true, the variables of the environment of the first process are recorded, and post-processing effects of the display will be adjusted in relation to these variables to adapt it to the performance of the mobile device.

Throughout the description and claims the word "comprises" and variants thereof do not seek to exclude other technical features, additions, components or steps. For the persons skilled in the art, other objects, advantages and features of the invention will be inferred in part from the description and in part from putting the invention into practice. The following examples and drawings are provided by way of illustration and are not intended to restrict the present invention. Furthermore, the present invention covers all the possible combinations of particular and preferred embodiments herein indicated.

### BRIEF DESCRIPTION OF THE DRAWINGS

A series of drawings which help to better understand the invention and which are expressly related to an embodiment of said invention provided as a non-limiting example thereof is briefly described below.

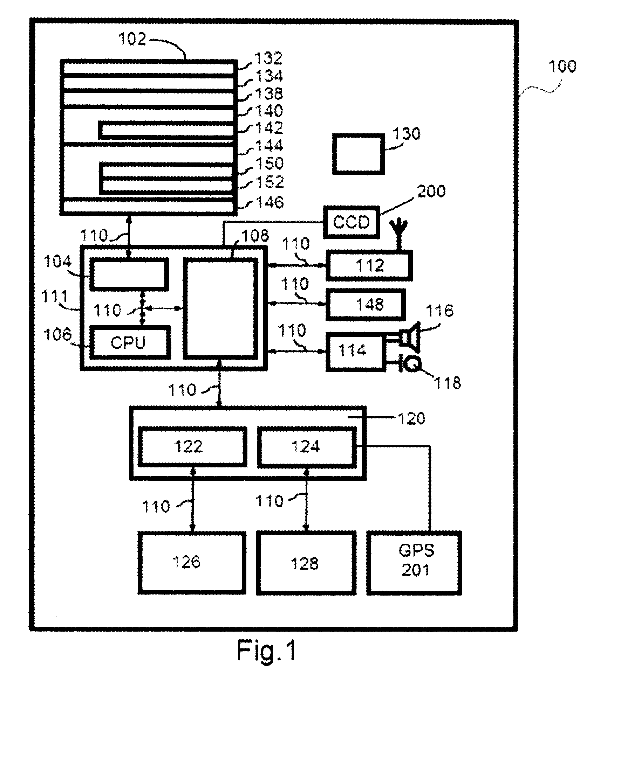

Figure 1 shows a diagram of the portable electronic device implementing the present invention.

### DETAILED DISCLOSURE OF AN EMBODIMENT OF THE INVENTION

The present invention is implemented in a portable electronic device 100 which can be any device selected from computers, tablets and mobile telephones, although a preferred architecture for a mobile device is shown in Figure 1. In general, any programmable communications device can be configured as a device for the present invention.

Figure 1 illustrates a portable electronic device according to several embodiments of the invention. The portable electronic device 100 of the invention includes a memory 102, a memory controller 104, one or more processing units 106 (CPU), a peripheral interface 108, an RF circuit system 112, an audio circuit system 114, a speaker 116, a microphone 118, an input/output (I/O) subsystem 120, a touch screen 126, other input or control devices 128 and an external port 148. These components communicate with one another over one or more signal communication buses or lines 110. The device 100 can be any portable electronic device, including, though not limited to, a laptop, a tablet, a mobile telephone, a multimedia player, a personal digital assistant (PDA), or the like, including a combination of two or more of these items. It must be taking into account that the device 100 is only one example of a portable electronic device 100 and that the device 100 can have more or less components than those shown, or a different configuration of components. The different components shown in Figure 1 can be implemented in hardware, software or in a combination of both, including one or more signal processing and/or application-specific integrated circuits. Likewise, the screen 126 has been defined as a touch screen, although the invention can likewise be implemented in devices with a standard screen.

The memory 102 can include a high-speed random access memory and can also include a non-volatile memory, such as one or more magnetic disc storage devices, flash memory devices or other non-volatile solid state memory devices. In some embodiments, the memory 102 can furthermore include storage located remotely with respect to the one or more processors 106, for example, storage connected to a network which is accessed through the RF circuit system 112 or through the external port 148 and a communications network (not shown), such as the Internet, intranet(s), Local Area Networks (LAN), Wide Local Area Networks (WLAN), Storage Area Networks (SAN) and others, or any of the suitable combinations thereof. Access to the memory 102 by other components of the device 100, such as the CPU 106 and the peripheral interface 108, can be controlled by means of the memory controller 104.

The peripheral interface 108 connects the input and output peripherals of the device to the CPU 106 and the memory 102. One or more processors 106 run different software programs and/or instruction sets stored in memory 102 for performing different functions of the device 100 and for data processing.

In some embodiments, the peripheral interface 108, the CPU 106 and the memory controller 104 can be implemented in a single chip, such as a chip 111. In other embodiments, it can be implemented in several chips.

The RF (radio frequency) circuit system 112 receives and sends electromagnetic waves. The RF circuit system 112 converts the electrical signals in electromagnetic waves and vice versa and is communicated with communications networks and other communication devices through electromagnetic waves. The RF circuit system 112 can include a widely known circuit system to perform these functions, including, though not limited to, an antenna system, an RF transceiver, one or more amplifiers, a tuner, one or more oscillators, a digital signal processor, a set of CODEC chips, a card of Subscriber Identity Module (SIM), a memory, etc. The RF circuit system 112 can communicate with networks, such as the Internet, also referred to as World Wide Web (WWW), an Intranet and/or a wireless network, such as a cellular telephone network, a Wireless Local Area Network (LAN) and/or a Metropolitan Area Network (MAN) and with other devices by means of wireless communication. Wireless communication can use any of a plurality of communication standards, protocols and technologies, including, though not limited to, the Global System for Mobile Communications (GSM), the Enhanced Data Rates for GSM Evolution (EDGE), Wideband Code Division Multiple Access (W-CDMA), Code Division Multiple Access (CDMA), Time Division Multiple Access (TDMA), Bluetooth, wireless access (Wi-Fi) (for example, IEEE 802.11a, IEEE 802.11b, IEEE 802.11g and/or IEEE 802.11n), Voice over IP (VoIP) protocol, Wi-MAX, an electronic mail protocol, instant messaging and/or Short Message Service (SMS) or any other suitable communication protocol, including communication protocols not yet developed as of the date of filing this document.

The audio circuit system 114, speaker 116 and microphone 118 provide an audio interface between a user and the device 100. The audio circuit system 114 receives audio data from the peripheral interface 108, converts the audio data into an electrical signal and transmits the electrical signal to the speaker 116. The speaker converts the electrical signal into sound waves that are audible for humans. The audio circuit system 114 also receives electrical signals converted by the microphone 116 from sound waves. The audio circuit system 114 converts the electrical signal into audio data and transmits the audio data to the peripheral interface 108 for processing. The audio data can be recovered from and/or transmitted to the memory 102 and/or the RF circuit system 112 by means of the peripheral interface 108. In some embodiments, the audio circuit system 114 also includes a headset connection (not shown). The headset connection provides an interface between the audio circuit system 114 and removable audio input/output peripherals, such as headsets having only output or a headset having both an output (earphones for one or both ears) and an input (microphone).

The I/O subsystem 120 provides the interface between the input/output peripherals of the device 100, such as the touch screen 126 and other input/control devices 128, and the peripheral interface 108. The I/O subsystem 120 includes a touch screen controller 122 and one or more input controllers 124 for other input or control devices. The input controller or controllers 124 receives/receive / sends/send electrical signals from/to other input or control devices 128. The other input/control devices 128 can include physical buttons (for example push buttons, toggle switches, etc.), dials, slide switches and/or geographic locating means 201, such as GPS or equivalent.

The touch screen 126 in this practical embodiment provides both an output interface and an input interface between the device and a user. The touch screen controller 122 receives/sends electrical signals from/to the touch screen 126. The touch screen 126 shows the visual output to the user. The visual output can include text, graphics, video and any combinations thereof. Part or all of the visual output can correspond with user interface objects, the additional details of which are described below.

The touch screen 126 also accepts user inputs based on the haptic or touch contact. The touch screen 126 forms a contact-sensitive surface accepting user inputs. The touch screen 126 and the touch screen controller 122 (together with any of the associated modules and/or instruction sets of the memory 102) detects contact (and any motion or loss of contact) on the touch screen 126 and converts the detected contact into interaction with user interface objects, such as one or more programmable keys which are shown in the touch screen. In one embodiment, by way of example, a point of contact between the touch screen 126 and the user corresponds with one or more of the user's fingers. The touch screen 126 can use LCD (Liquid Crystal Display) technology or LPD (Light-emitting Polymer Display) technology, although other display technologies can be used in other embodiments. The touch screen 126 and the touch screen controller 122 can detect contact and any motion or lack thereof using any of a plurality of contact sensitivity technologies, including, though not limited to, capacitive, resistive, infrared and surface acoustic wave technologies, as well as other proximity sensor arrays or other elements to determine one or more points of contact with the touch screen 126.

The device 100 also includes a power supply system 130 to power the different components. The power supply system 130 can include a power management system, one or more power sources (for example batteries, alternating current (AC)), a rechargeable system, a power failure detection circuit, a power converter or inverter, a power state indicator (for example, a Light-emitting Diode (LED)) and any other component associated with the generation, management and distribution of power in portable devices.

In some embodiments, the software components include an operating system 132, a communication module 134 (or instruction set), a contact/motion module 138 (or instruction set), a graphic module 140 (or instruction set), a user interface state module 144 (or instruction set) and one or more applications 146 (or instruction set).

The operating system 132 (for example, Darwin, RTXC, LINUX, UNIX, OS X, WINDOWS, or an embedded operating system such as VxWorks), includes different software components and/or controllers to control and manage general tasks of the system (for example, memory management, storage device control, power management, etc.) and make communication between different hardware and software components easier.

The communication module 134 makes communication with other devices easier through one or more external ports 148 and also includes different software components to manage data received by the RF circuit system 112 and/or the external port 148. The external port 148 (for example, a Universal Serial Bus (USB), FIREWIRE, etc.) is suitable for being connected directly to other devices or indirectly through a network (for example, the Internet, wireless LAN, etc.).

The contact/motion module 138 detects contact with the touch screen 126, together with the touch screen controller 122. The contact/motion module 138 includes different software components to perform different operations related to the detection of contact with the touch screen 126, such as determining if contact has taken place, determining if there is motion in the contact and tracking the motion through the touch screen, and determining if contact has been interrupted (i.e., if contact has stopped). The determination of motion of the point of contact can include determining the speed (magnitude), velocity (magnitude and direction) and/or acceleration (including magnitude and/or direction) of the point of contact. In some embodiments, the contact/motion module 126 and the touch screen controller 122 also detect contact on the touch pad.

The graphic module 140 includes different software components known for showing and displaying graphics on the touch screen 126. It should be taken into account that the term "graphics" includes any object that can be shown to a user including, though not limited to, text, web pages, icons (such as user interface objects including programmable keys), digital images, videos, animations and the like.

In some embodiments, the graphic module 140 includes an optical intensity module 142. The optical intensity module 142 controls the optical intensity of graphic objects, such as user interface objects, shown in the touch screen 126. The control of optical intensity can include the increase or reduction of optical intensity of a graphic object. In some embodiments, the increase or reduction can follow pre-determined functions.

The user interface state module 144 controls the user interface state of the device 100. The user interface state module 144 can include a blocking module 150 and an unblocking module 152. The blocking module detects fulfillment of any of one or more conditions for making the transition of the device 100 to a user interface blocked state and for making the transition of the device 100 to the blocked state. The unblocking module detects fulfillment of any of one or more conditions for making the transition of the device to a user interface unblocked state and for making the transition of the device 100 to the unblocked state.

The application or applications 130 can include any application installed in the device 100, including, though not limited to, a browser, an address book, contacts, electronic mail, instant messaging, text processing, keyboard emulations, graphic objects, JAVA applications, encryption, digital rights management, voice recognition, voice replication, capability of determining position (such as that provided by the global positioning system (GPS)), a music player (which plays music recorded and stored in one or more files, such as MP3 or AAC files), etc.

In some embodiments, the device 100 can include one or more optional optical sensors (not shown), such as CMOS or CCD 200 image sensors, for use in image formation applications.

Nevertheless, the indicated hardware structure is one of the possible structures and it must be taken into account that the device 100 can include other image-capturing elements such as a camera, scanner, laser marker or the combination of any of these types of devices, which can provide the mobile device with representation of the real environment in a video format, sequence of images, in a vectorial format or any type of combination of the mentioned formats.

Likewise, the device 100 can include geographic locating devices based on the GPS positioning satellite networks, geographic location assistance devices based on GPS satellite networks and IP location of internet networks -AGPS-, geographic locating devices based on triangulating radio signals provided by Wi-Fi antennas and Bluetooth® devices (ISSP), the combination of any of these mentioned devices or any type of device that allows providing the mobile device with numerical data of the geographic location thereof.

The device 100 can include any type of element capable of representing images in real time with a minimum of 24 FPS (Frames Per Second) such as TFT, TFT-LED, TFT-OLED, TFT-Retina displays, the combination of any of the aforementioned, in addition to new generation Holo-TFT, transparent and Micro-Projector displays or any device of graphical representation that can provide the mobile device 100 with a way to represent visual contents to the user.

The device 100 includes a processor or set of processors which, alone or in combination with graphics processors such as a GPU (Graphics Processing Unit) or APU (Accelerated Processing Unit) can provide the mobile device 100 with the capability of representing vectorial graphics in real run time and using them to form textured polygons through vectorial representation libraries (sets of standard graphical representation procedures for different platforms), such as OpenGL, DirectX or any type of libraries intended for this purpose.

The first process comprised in the method object of the invention consists of geographically locating the mobile device, with the highest precision and accuracy allowed by the GPS positioning satellite networks, without using resources provided by others, such as GPS navigation providers, geographic map and GPS marking providers, GPS navigation grid providers, and without needing to connect to internet networks for downloading or direct use of the mentioned resources.

This first method enables direct interaction with the represented vectorial graphics, through the touch screen 126 or the communication interface with the hardware provided by the mobile device 100. Interactions that allow both virtual navigation of the vectorial graphical environment and direct action on the elements forming it, in turn establishing basic variables for operating the remaining steps.

### Step of geographically locating virtual environments

The device 100 is configured for assigning position vectors in the virtual environment of the device 100, establishing the non-defined composite variable of the mobile device Vector3 (a, b, c) and the defined composite variable Vector3 (LonX, LatY, AltZ), pre-determined by the geographic coordinates of the polygonal group that must be represented, converting it into Vector3 (LonPosX, LatPosY, AltPosZ) from the data delivered by the geographic locating device 201 included in the mobile device 100.

The variables are defined as:
- LonPosX = ((LonX+180)/360)x LonN;
   - Where LonN is a constant established by the camera's field of vision (FOV).
- LatPosY = ((LatY +(180xNS))/360)xLatN;
   - Where LatN is a constant established by the camera's FOV; and
   - NS is a variable of North/South hemisphere.
- AltPosZ = AltZ x AltN;
   - Where AltN is a constant established by the camera's FOV.
- a = ((GPSx+180)/360) x LonN;
   - Where GPSx is a floating value established by the GPS of the mobile device.
- b = ((GPSy+(180xNS))/360) x LatN;
   - Where GPSy is a floating value established by the GPS of the mobile device; and
   - NS is a variable of North/South hemisphere.
- c = GPSz x AltN;
   - Where GPSz is a floating value established by the GPS of the mobile device.

### Step of interacting with the vectorial elements making up a virtual scene

After the preceding step a difference of the group of vectorial polygons with the mobile device is established:
- Pos (PosX, PosY, PosZ) = Vector3 (LonPosX, LatPosY, AltPosZ) - Vector3 (a,b,c)

This difference establishes three composite variables and two simple variables, where:
- Position is the composite variable of movement of the mobile device in the virtual environment.
- ARP is the composite variable defining the radius of the representation area of the virtual environment with reference to the mobile device.
- Loc is the composite variable defining the reverse calculation of real GPS global positioning of the group.

In this step, a position vector of movement at run time is provided and assigned to the transformation of motion of the mobile device with reference to the group of polygons:
- Position = Pos (PosX, PosY, PosZ).

The defined approach and representation area is established:
- ART = Vector3 (LonPosX, LatPosY, AltPosZ) - Vector3 (a, b, c)
- ARF = Vector3 (a, b, c)
- ARP = (ART - ARF) x Ar;
   - Where Ar is the defined value of the distance from the group.

The calculation of the transformation to the virtual environment of the group of polygons is then obtained and the reverse operation is applied to assure that its real geographic location with reference to the real geographic location of the mobile device is correct, and representation security control is established.
- Loc = (((((a + ART.X) / LonN) x 360) - 180), ((((b + ART.Y) / LatN) x 360) - (180 x NS)), ((c + ART.Z) / AltN))
- Where RP0 is the simple Boolean variable providing the true or false value of representation; and where
- RPC is the simple Boolean variable providing the true or false value of layer assignment.

### Step of assigning layer numbering

Once the device 100 enters the predefined approach area, around the representation group, variables of layer numbering are assigned, where:
- C0 = Pos (PosX, PosY, PosZ);
   - This layer is assigned to the image-capturing device 200.
- C1 = Pos (PosX, PosY, PosZ) - ARP/4.
- C2 = Pos (PosX, PosY, PosZ) - ARP/2.
- C3 = Pos (PosX, PosY, PosZ) - ARP; -
   - This is the priority representation layer.

The second process of the invention consists of the representation of textured vectorial graphics in real run time, with the best possible quality provided by the mobile device 100.

This process includes the steps intended for solving basic display problems in virtual environments and the synchronization thereof with a real environment such as:
- Scaling of the represented vectorial graphics taking into account the real environment in which representation is intended.
- The reduction of motion of the represented vectorial graphics in relation to the real synchronization distance with the geographic location thereof in the real environment.

This second process is what allows, in different aspects of the representation of the virtual environments, helping to provide visual coherence with the real environment in which they must be represented.

### Step of independent representation of scenes with vectorial content

Using the native executable statements of each mobile device 100, the image-capturing device 200 or vectorial data thereof is activated and the variable of layer "C0" is assigned, thus establishing the sampling rate in Hertz, frames per second and image-capturing resolution (in pixels per inch) of the capturing device.

The previously described values are subsequently assigned to the capturing device, which allows adjusting its efficiency with reference to the representation of the largest amount of polygons and textures possible that the mobile device 100 allows obtaining.

Depending on the approach to the objective, the frames per second that the capturing device must provide, the sampling thereof in Hertz and capture resolution, for maximum optimization, decrease or increase through a value with established maximums and minimums. These values are dependent on the variable established by the difference of the layer closest to the mobile device and the layer farthest away from same.
- Cam = C3 - C0.

Through the use of the overlay of layers, an amount of RAM memory resources and an independent representation priority are assigned to each of them, without needing to represent all of them in an array.

The method then proceeds to synchronization thereof by means of the difference calculated in the first method, established by variables C1, C2, C3, where C3 would correspond to the layer with the highest representation priority.

### Step of managing hardware resources of the mobile device 100

This step allows managing the quality of represented vectorial graphics, always subordinating this quality to the capabilities and characteristics provided by the mobile device 100, thus obtaining the highest available quality without affecting fluidity of the graphical representation or of the process of the system.

The values of layer are subjected to a summation thereof and a variable multiplied by the defined constant of the hardware of the device HW = High (3), Medium (2), Low (1) is extracted, where:
- Quality = (C0 + C1 + C2 + C3) x HW

This formula will determine the amount of polygons and the maximum size of the textures that the device must process in real run time from constraints. Therefore, for example, if Quality >= 100... then...PC3 = 100,000 polygons, TC3 = 512 x 512 pixels.

The amount of polygons and size of the textures shown in the scene depends on the distance of the polygonal group in relation to the mobile device 100, subtracting the amount of polygons and size of textures from the remaining lower layers, the closer the mobile device 100 is to the group of geographically located polygons.

Therefore, the closer the mobile device is to the group of geographically located polygons, the larger the amount of polygons and size of textures could be assigned to the layer C3 or priority representation layer.

### Step of solving basic display problems in virtual environments

From:
- The difference established in the step of interacting with the vectorial elements making up a virtual scene, and the position:
   Pos (PosX, PosY, PosZ) = Vector3 (LonPosX, LatPosY, AltPosZ) - Vector3 (a,b,c)
- The variable Position; and
- The value obtained by the variable ARP;
the camera's FOV in real run time is calculated to synchronize the display of the real environment, captured by the capturing device of the mobile device, with the representation of the virtual environment.
- Rfov = (Position - ARP) / Cfov;
   - Where Cfov is the adjustment constant of the FOV.

Use parameters are then established, limiting them to a pre-determined maximum and a minimum through constraints.
- If Rfov < = RfovMax then Rfov = RfovMax.
- If Rfov > = RfovMin then Rfov = RfovMin.

This system implies a clear difference with respect to the previously mentioned systems within the technologies applied to mobile devices based on technologies belonging to others, technologies which, separately, already use available hardware resources of the mobile device for both representing augmented or virtual reality and for geographically locating virtual elements. Without obtaining the representation quality or geographic location accuracy that is obtained by the system of the present invention based on the described methods.

The process of the invention allows obtaining better quality of the virtual environments represented and located with the highest accuracy provided by GPS positioning satellites, for all the mobile devices available on the market within the reference framework, and it allows operation that does not depend on the need to connect to the Internet to use it.

## Claims

1. A method for the representation of geographically located virtual environments of
a mobile device (100) comprising
a first process comprising the steps of:
finding out the position vectors in the local environment of the mobile device, both of the device (100) and of the group of polygons that it must represent;
generating a difference between the position vectors of the device and of the polygon, where composite and simple variables are established from the composite reference constant: length, altitude and height, assigned to a group of polygons;
assigning the variables of local position, distance from the target group, the reverse calculation of GPS global positioning, the environment parameters and
the layer numbering, once the mobile device (100) enters the approach area, which is predefined around the representation group; and
a second process comprising the steps of:
activating the image-capturing device (200) of the mobile device (100);
giving layer-based representation orders, linking the layers to this order; where the representation order is provided by the difference established in the first process and determines the quality of the represented element, its memory buffer assignment, its representation rate in Hz and its vertical and horizontal synchronization, giving priority to the layer closest to the device and nil priority to the captured image sequences;
and where once the Boolean representation variable is established as true, the variables of the environment of the first process are recorded, and in relation to these variables the post-processing effects of the display are adjusted to adapt it to the performance of the mobile device (100).

2. The method of claim 1, wherein a non-defined composite variable of the mobile device Vector3 (a, b, c) and the defined composite variable Vector3 (LonX, LatY, AltZ), pre-determined by the geographic coordinates of the polygonal group that must be represented, converting it into Vector3 (LonPosX, LatPosY, AltPosZ), is established from the data delivered by the geographic locating device (201) included in the mobile device (100).

3. The method of any of claims 1-2, wherein the difference of the group of vectorial polygons with the mobile device is defined as:
Pos (PosX, PosY, PosZ) = Vector3 (LonPosX, LatPosY, AltPosZ) - Vector3 (a,b,c);
providing a position vector of movement at run time and assigning it to the transformation of motion of the mobile device with reference to the group of polygons.

4. The method according to any of claims 1-3, wherein the difference establishes three composite variables (Pos, ARP, Loc) and two simple variables, where
- position is a composite variable of movement of the mobile device in the virtual environment:
- position = Pos (PosX, PosY, PosZ);
- ARP is a composite variable defining the radius of the representation area of the virtual environment with reference to the mobile device:
- ARP = (ART - ARF) x Ar;
where:
▪ ART = Vector3 (LonPosX, LatPosY, AltPosZ) - Vector3 (a, b, c)
▪ ARF = Vector3 (a, b, c); and
▪ Ar is the defined value of the distance from the group
- Loc is a composite variable defining the reverse calculation of the real GPS global positioning of the group:
- Loc = (((((a + ART.X) / LonN) x 360) - 180), ((((b + ART.Y) / LatN) x 360) - (180 x NS)), ((c + ART.Z) / AltN))
▪ where RP0 is the simple Boolean variable providing the true or false value of representation; and
▪ where RPC is the simple Boolean variable providing the true or false value of layer assignment.

5. The method according to any of claims 1-4, wherein once the device (100) enters the predefined approach area, around the representation group, the variables of layer numbering are assigned, where:
- C0 = Pos (PosX, PosY, PosZ);
- this layer is assigned to the image-capturing device 200;
- C1 = Pos (PosX, PosY, PosZ) - ARP/4;
- C2 = Pos (PosX, PosY, PosZ) - ARP/2;
- C3 = Pos (PosX, PosY, PosZ) - ARP;
- this is the priority representation layer.

6. The method according to any of claims 1-5, wherein the second process comprises the step of activating the image-capturing device 200 or vectorial data thereof and assigning a variable of layer C0, thus establishing the sampling rate in Hertz, frames per second and image-capturing resolution in pixels per inch of the capturing device, where these values are dependent on the variable established by the difference of the layer closest to the mobile device C3 and the layer farthest away from same C0; and assigning the previously described values to the capturing device.

7. The method according to any of claims 1-6, wherein starting from:
the established difference
Pos (PosX, PosY, PosZ) = Vector3 (LonPosX, LatPosY, AltPosZ) - Vector3 (a,b,c)
the variable position; and
the value obtained by the variable ARP;
the field of vision of the camera in real run time is calculated to synchronize the display of the real environment, captured by the capturing device of the mobile device, with the representation of the virtual environment, where Rfov = (Position - ARP) / Cfov;
where Cfov is the adjustment constant of the field of vision;
and where the use parameters are subsequently established, limiting them to a pre-determined maximum and a pre-determined minimum through constraints if Rfov < = RfovMax then Rfov = RfovMax;
if Rfov > = RfovMin then Rfov = RfovMin.

8. A mobile device (100) comprising:
data display means (126);
one or more processors (106);
a memory (102); and
one or more programs (132 to 146) in which the program or programs are stored in memory (102) and configured for being run by means of the processor or processors (106), the programs (132 to 146) including instructions for:
finding out the position vectors in the environment of the device (100) as well as the position vectors of the group of polygons that it must represent;
generating a difference between the position vectors of the device and of the polygon, where composite and simple variables are established from the composite reference constant: length, altitude and height, assigned to a group of polygons;
assigning the variables of local position, distance from the target group, the reverse calculation of GPS global positioning, the environment parameters and the layer numbering, once the mobile device (100) enters the approach area, which is predefined around the representation group;
activating an image-capturing device (200) of the mobile device (100);
giving layer-based representation orders, linking the layers to this order; where the representation order is provided by the difference established in the first process and determines the quality of the represented element, its memory buffer assignment, its representation rate in Hz and its vertical and horizontal synchronization, giving priority to the layer closest to the device and nil priority to the captured image sequences;
and adjusting the post-processing effects of the display to adapt it to the performance of the mobile device (100).

9. A computer program product with instructions configured for being run by one or more processors (106) which, when run by the device (100) of claim 8, make the device (100) perform the method according to any of claims 1-7.
